# EUROPÄISCHE PATENTANMELDUNG

(11) **EP 1 873 395 A1**
(43) Veröffentlichungstag der Anmeldung: **02.01.2008**
(21) Anmeldenummer: 07011077.0
(22) Anmeldetag: 06.06.2007
(51) Int. Cl.: F03D 1/06, F03D 7/04, B64C 21/04, B64C 21/08

(54) **Verfahren zum Betreiben einer zumindest einen fluiddynamischen Auftriebskörper aufweisenden Vorrichtung, insbesondere einer Windenergieanlage**

(30) Priorität: 16.06.2006 DE 102006028167
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Verfahren zum Betreiben einer Vorrichtung, die zumindest einen fluiddynamischen Auftriebskörper aufweist, etwa eine Windenergieanlage mit Rotorblättern, ein Flugzeug mit Tragflächen, ein Hubschrauber mit Rotorblättern oder dergleichen. Insbesondere mittels geeigneter Sensoren werden Kennwerte erfasst, die kennzeichnend sind für das Auftreten von auftriebskörperbedingten Verwirbelungen des diesen umgebenden Mediums, insbesondere auftriebskörperbedingten Geräuschen, und/oder für das Auftreten von Strömungsabrissen an dem Auftriebskörper und/oder für ein Vereisen des Auftriebskörpers (22). Abhängig von den erfassten Kennwerten wird aus einer Mehrzahl von einem oder jedem Auftriebskörper (22) zugeordneten Ruidaustrittsöffnungen (24) ein aus einer Druckquelle stammendes Fluid, etwa Luft, derart nach außen an das den Auftriebskörper (22) umgebende Medium geleitet, dass durch die resultierenden Fluidströmungen (26) die auftriebskörperbedingten Verwirbelungen und/oder die Strömungsabrisse und/oder das Vereisen reduziert oder verhindert werden.

## Beschreibung

Die vorliegende Erfindung betrifft ein Verfahren zum Betreiben einer Vorrichtung, die zumindest einen fluiddynamischen Auftriebskörper aufweist, etwa eine Windenergieanlage mit Rotorblättern, ein Flugzeug mit Tragflächen, ein Hubschrauber mit Rotorblättern oder dergleichen. Insbesondere betrifft die Erfindung ein Verfahren zum Betreiben einer Windenergieanlage mit einem von Wind antreibbaren Rotor mit zumindest einem Rotorblatt, mit einem Generator zur Umwandlung der mechanischen Energie des Rotors in elektrische Energie sowie mit einem Turm, an dem der Rotor angeordnet ist. Des Weiteren betrifft die vorliegende Erfindung eine Vorrichtung, insbesondere eine Windenergieanlage, zur Durchführung dieser Verfahren.

Windenergieanlagen verursachen während der Rotation der Rotorblätter häufig Windgeräusche. Diese Windgeräusche werden insbesondere von Bewohnern an die Windenergieanlagen angrenzender Siedlungen als störend empfunden. Je größer die zu erwartende Lärmentwicklung ist, desto unwahrscheinlicher ist es, dass Behörden für die Neuerrichtung von Windenergieanlagen oder Windenergieanlagenparks Genehmigungen erteilen. Die Windgeräusche stammen im Wesentlichen von am Rotorblatt entstehenden Luftverwirbelungen.

Die Luftverwirbelungen haben darüber hinaus unter Umständen ungewollte Strömungsabrisse an den Rotorblättern zur Folge, die den Wirkungsgrad der Windenergieanlagen herabsetzen.

Ein weiteres Problem, dass im Zusammenhang mit der Rotation von Rotorblättern auftritt, ist das ungewollte und störende Vereisen derselben bei witterungsbedingt niedrigen Außentemperaturen. Wenn das Vereisen nicht verhindert wird, können beispielsweise durch die eisbedingten Zusatzlasten und die resultierenden Unwuchten für die Windenergieanlage gefährliche Schwingungen entstehen.

Eine oder sämtliche der genannten Probleme können nicht nur bei Windenergieanlagen auftreten, sondern allgemein bei Vorrichtungen mit zumindest einem fluiddynamischen Auftriebskörper, wie etwa Flugzeugen, Hubschraubern, Schiffen oder dergleichen.

Aufgabe der vorliegenden Erfindung ist es, ein Verfahren zum Betreiben einer zumindest einen fluiddynamischen Auftriebskörper aufweisenden Vorrichtung anzugeben, das es ermöglicht, auftriebskörperbedingte Verwirbelungen des diesen umgebenden Mediums, insbesondere auftriebskörperbedingte Geräusche und/oder Strömungsabrisse an dem Auftriebskörper und/oder ein Vereisen des Auftriebskörpers zu reduzieren oder zu verhindern. Insbesondere soll ein Verfahren zum Betreiben einer Windenergieanlage angegeben werden, mit dem windbedingte Rotorblattgeräusche und/oder Strömungsabrisse und/oder ein Vereisen des Rotorblattes reduziert oder verhindert werden kann. Des Weiteren ist es Aufgabe der vorliegenden Erfindung, eine Vorrichtung, insbesondere eine Windenergieanlage, zur Durchführung dieser Verfahren anzugeben.

Diese Aufgabe wird gelöst durch Verfahren mit den Merkmalen der Ansprüche 1 - 4.

Erfindungsgemäß wird demnach abhängig von insbesondere mittels geeigneter Sensoren erfasster Kennwerte, die kennzeichnend sind für das Auftreten auftriebskörperbedingter Verwirbelungen, insbesondere rotorblattbedingter Windgeräusche, und/oder für das Auftreten von Strömungsabrissen an dem Auftriebskörper, etwa dem Rotorblatt, und/oder für das Vereisen des Auftriebskörpers bzw. des Rotorblatts, aus einer Mehrzahl von einem oder jedem Auftriebskörper zugeordneten Fluidaustrittsöffnungen ein aus einer Druckquelle stammendes Fluid, etwa Luft, derart nach außen an die den Auftriebskörper, bevorzugt das Rotorblatt, umgebende Medium, wie etwa Luft, geleitet, dass durch die resultierende Fluidströmung auftriebskörperbedingte Verwirbelungen, insbesondere rotorblattbedingte Windgeräusche, reduziert oder verhindert werden und/oder das Auftreten von Strömungsabrissen an dem Auftriebskörper und/oder ein Vereisen des Auftriebskörpers.

Die in der vorliegenden Anmeldung verwendete Bezeichnung "fluiddynamische Auftriebskörper" schließt insbesondere aerodynamische und hydrodynamische Auftriebskörper ein, wie etwa Rotorblätter für Windenergieanlagen, Rotorblätter für Hubschrauber, Tragflächen oder Propeller von Flugzeugen, Schiffsschrauben oder dergleichen.

Die Erfindung geht zum einen von der Erkenntnis aus, dass durch das Herauspressen von Luft aus den Fluidaustrittsöffnungen größere Verwirbelungen und Strömungsabrisse, die zur Geräuschentwicklung beitragen oder den Auftrieb der Auftriebskörper negativ beeinflussen, reduziert oder verhindert werden können. Diese Phänomene treten bei der Umströmung der Auftriebskörper durch das umgebende Medium, beispielsweise Luft, auf.

Vorbild für das erfindungsgemäße Verfahren ist das in der Natur zu beobachtende Prinzip, mit dem es Eulen gelingt, nahezu geräuschlos zu fliegen. Hauptgrund der besonderen Flugeigenschaften der Eulen ist ein feiner Flaum an der Oberfläche der Flügel der Eulen, der die Bildung der vorgenannten Wirbel und Störungsabrisse verhindert bzw. entstehende Wirbel zerstreut. Die durch das Herauspressen des Druckfluids aus den Austrittsöffnungen resultierende Fluidströmung bzw. Fluidströmungen übernehmen erfindungsgemäß die Funktion dieses Eulenflaums.

Zum anderen kann insbesondere bei Verwendung eines Druckfluids einer geeigneten Temperatur durch die Erzeugung der Fluidströmungen einem Vereisen des Auftriebskörpers entgegengewirkt werden. Die Temperatur des Druckfluids sollte dabei zweckmäßigerweise oberhalb des Eis-Schmelzpunkts liegen, bevorzugt beträgt die Temperatur mindestens 1° Celsius, besonders bevorzugt mindestens 10° Celsius.

Zur Reduzierung/Verhinderung von auftriebskörperbedingten Verwirbelungen, insbesondere Geräuschen, und/oder Strömungsabrissen ist in einer weiteren eigenständigen Ausführungsform der vorliegenden Erfindung vorgesehen, abhängig von den oben genannten Kennwerten Betriebsparameter der Vorrichtung mit fluiddynamischem Auftriebskörper, insbesondere einer Windenergieanlage, einzustellen, etwa den Windanstellwinkel eine Rotorblatts und/oder die Anlagendrehzahl einer Windenergieanlage, und/oder ein oder mehrere, dem Auftriebskörper zugeordnete Auftriebskörpervorflügel, bevorzugt Rotorblattvorflügel, zu steuern und/oder an dem Auftriebskörper angeordnete Vortex-Generatoren zu steuern, insbesondere diese Generatoren ein- und auszufahren.

Vortex-Generatoren sind im Stand der Technik nicht steuerbar. Erfindungsgemäß wird deshalb vorgeschlagen, Vortex-Generatoren so auszubilden, dass sie aus einer aktiven, den Auftriebskörper bzw. das diesen umgebende Medium beeinflussenden Position in eine inaktive Position verfahrbar sind. Dies kann beispielsweise geschehen, indem die Vortex-Generatoren derart an dem Auftriebskörper angeordnet werden, dass sie, mittels geeigneter Motoren bzw. Aktoren, steuerbar unter die Oberfläche desselben verfahrbar sind, d.h. in das Innere des Auftriebskörpers. Nur bei Bedarf werden die Vortex-Generatoren dann aus dem Inneren des Auftriebeskörpers nach außen, in die aktive Position verfahren.

Erfindungsgemäß ist es möglich, nach Erfassung von Kennwerten, die auf störende Verwirbelungen, Strömungsabrisse, Vereisung oder dergleichen hinweisen, automatisch verschiedene Gegenmaßnahmen einzuleiten, die diesen Phänomenen entgegenwirken.

Was die Kennwerte betrifft, die für die vorgenannten Phänomene kennzeichnend sind, so können diese kontinuierlich oder in vorbestimmten Zeitabständen während des Betriebs der Vorrichtung mit fluiddynamischem Auftriebskörper, insbesondere während des Betriebs der Windenergieanlage, erfasst werden.

Weiter können die Kennwerte Schall- oder Luftdruckmesswerte umfassen, die während einer Bewegung des Auftriebskörpers durch das umgebende Medium, also beispielsweise während des Fliegens eines Flugzeugs oder während der Rotation eines Rotorblattes einer Windenergieanlage, bevorzugt in unmittelbarer Nähe zum Auftriebskörper gemessen werden, insbesondere an der Oberseite des Auftriebskörpers. Vorzugsweise wird die Messung mittels geeigneter Sensoren, insbesondere akustischer Sensoren, etwa Mikrofonen durchgeführt. Diese Sensoren können dem Auftriebskörper zugeordnet sein, insbesondere an diesem angeordnet sein.

Abhängig von den erfassten Schall- oder Luftdruckmesswerten können dann die beschriebenen Gegenmaßnahmen eingeleitet werden, die beispielsweise einer Geräuschentwicklung entgegenwirken.

Die Schall- oder Luftdruckmesswerte können beispielsweise mittels Lichtstrahlen, vorzugsweise Laserstrahlen, erfasst werden, die zumindest abschnittsweise entlang beispielsweise eines Rotorblattes einer Windenergieanlage durch diejenigen Luftbereiche geführt werden, in denen Verwirbelungen, Strömungsabrisse etc. erwartet werden. Dazu ist es denkbar, ausgehend von der Rotorblattwurzel zumindest einen Laserstrahl benachbart zum Rotorblatt entlang desselben bis zur Rotorblattspitze zu führen und dort oder ggf. nach Reflexion an einem dort angeordneten Spiegel wiederum an der Blattwurzel zu detektieren. Aus den Parametern des detektierten Laserstrahls können Rückschlüsse auf die durchquerten Luftbereiche gezogen und Strömungsabrisse, Verwirbelungen und dergleichen detektiert werden.

In einer weiteren Ausführungsform der vorliegenden Erfindung können die Kennwerte die Windverhältnisse umfassen, die am Ort der Vorrichtung mit fluiddynamischen Auftriebskörper, bevorzugt einer Windenergieanlage, oder im Vorfeld derselben herrschen. Dabei können die Windverhältnisse, insbesondere die Windgeschwindigkeit und/oder die Windrichtung, durch geeignete Sensoren erfasst werden, etwa mittels einem Windgeschwindigkeitsgeber.

Die Erfassung bzw. die Messung der Windverhältnisse, insbesondere der Windgeschwindigkeit, kann bei Verwendung der Erfindung im Zusammenhang mit einer Windenergieanlage unmittelbar am Ort des Rotors, insbesondere den Rotorblättern, erfolgen. Entsprechend können die oben beschriebenen Maßnahmen zur Reduktion der windbedingten Strömungen oder dergleichen abhängig von den aktuell an dem Rotor bzw. an den Rotorblättern herrschenden Windverhältnissen erfolgen, also den erfassten IstWerten der Windverhältnisse am Ort der Windenergieanlage.

Alternativ kann die Erfassung aber auch im räumlichen Vorfeld der Windenergieanlage auf der windzugewandten Seite derselben erfolgen, d.h. in räumlichem Abstand zu der Windenergieanlage. Dabei würden die genannten Maßnahmen in Abhängigkeit von zukünftig am Ort der Windenergieanlage herrschenden Windverhältnissen erfolgen, wie sie aus den vorgenannten Windvorfeldmessungen abgeleitet werden können.

Als Kennwert kann auch die Temperatur des den Auftriebskörper umgebenden Mediums, vorzugsweise die Lufttemperatur, und/oder die Temperatur des Auftriebskörpers selbst erfasst werden. Abhängig von der erfassten Temperatur kann dann das gegenüber dem Medium wärmere Druckfluid aus den Austrittsöffnungen gepresst werden, um ein Vereisen des Auftriebskörpers zu verhindern oder den Auftriebskörper aktiv zu enteisen.

Verschiedene Parameter der aus den Austrittsöffnungen austretenden Fluidströmungen können gesteuert bzw. eingestellt werden. Dies kann beispielsweise der Druck des Druckfluids sein, unter dem dieses aus den Austrittsöffnungen gepresst wird. Ein weiterer Steuerungsparameter kann der wirksame Querschnitt der Fluidaustrittsöffnungen sein, falls dieser Querschnitt steuerbar veränderbar ist. Wie der Fachmann erkennt, gibt es je nach konkreter technischer Ausgestaltung der Austrittsöffnungen, der Zuleitungen zu den Austrittsöffnungen, der Ausbildung der Druckquelle oder anderer Bauteile verschiedenste Steuerungsparameter, die die Fluidströmung beeinflussen können.

Falls die Steuerungsparameter abhängig von den die auftriebskörperbedingten, insbesondere rotorblattbedingten, Windgeräusche bzw. die Strömungsabrisse kennzeichnenden Schall- oder Luftdruckmesswerten eingestellt werden, ist es zweckmäßig, diese Werte mittels der oben beschriebenen, geeigneten Sensoren, insbesondere den akustischen Sensoren, zu messen.

Allen Alternativen zur abhängigen Einstellung der die Fluidströmungen beeinflussenden Steuerungsparameter ist gemein, dass möglichst für jede Betriebssituation die Steuerungsparameter so eingestellt werden, dass die auftriebskörperbedingten Geräusche bestmöglich reduziert werden.

In einer weiteren, besonders bevorzugten Ausführungsform der vorliegenden Erfindung werden die Steuerungsparameter der einzelnen, den jeweiligen Fluidaustrittsöffnungen zugeordneten Fluidströmungen unabhängig voneinander eingestellt. Die Parameter des Fluidstroms einer aus einer bestimmten Fluidaustrittsöffnung austretenden Fluidströmung können daher in anderer Weise eingestellt werden als die Parameter der Fluidströmung einer anderen Fluidaustrittsöffnung. Demnach können die einzelnen Fluidströmungen, kurz gesagt, unabhängig voneinander gesteuert werden. Dies ermöglicht eine besonders gute Anpassung der erzeugten Fluidströmungen an die vorgegebenen Bedingungen.

Eine Vorrichtung mit fluiddynamischen Auftriebskörper sowie insbesondere eine Windenergieanlage, die die Aufgabe der vorliegenden Erfindung löst und mit den erfindungsgemäßen Verfahren betrieben wird, weist die Merkmale der Ansprüche 9 bzw. 10 auf.

Eine derartige Windenergieanlage weist entsprechend eine Mehrzahl von dem Rotorblatt zugeordneten Fluidaustrittsöffnungen auf sowie eine steuerbare Druckquelle, aus der den Fluidaustrittsöffnungen das Druckfluid, bevorzugt Druckluft, zuleitbar ist. Das Druckfluid kann über geeignete Fluidleitungen und ggf. über geeignete Ventile von der Druckluftquelle zu den Fluidaustrittsöffnungen geleitet werden. In Abhängigkeit von den erfassten Kennwerten, die kennzeichnend sind für das Auftreten rotorblattbedingter Windgeräusche und/oder für das Auftreten von Strömungsabrissen oder dergleichen an dem Rotorblatt und/oder für ein Vereisen des Rotorblattes, ist das Druckfluid aus den Fluidaustrittsöffnungen derart nach außen an die das Rotorblatt umgebende Luft leitbar, dass durch die resultierenden Fluidströmungen rotorblattbedingte Windgeräusche und/oder Strömungsabrisse und/oder das Vereisen des Rotorblattes verhinderbar oder reduzierbar sind.

Die Steuerungsparameter, die die aus den Fluidaustrittsöffnungen austretendenden Fluidströmungen beeinflussen, sind zweckmäßigerweise durch eine der Windenergieanlage zugeordnete Steuerungseinrichtung einstellbar.

Was die Fluidaustrittsöffnungen betrifft, so können sie Bestandteil insbesondere steuerbarer Düsen sein. Beispielsweise die Größe des wirksamen Strömungsquerschnitts der Fluidaustrittsöffnungen kann steuerbar veränderbar sein. Bevorzugt sind die Fluidaustrittsöffnungen an der Oberfläche des Rotorblattes angeordnet. In einer weiteren Ausführungsform können die Fluidaustrittsöffnungen unmittelbar in die Wandungen des Rotorblattes eingelassen sein.

Zur Erfassung der rotorblattbedingten Windgeräusche weist das Rotorblatt zweckmäßigerweise ein oder mehrere akustische Sensoren auf, insbesondere Mikrofone. Die Mikrofone können dabei benachbart zu den Fluidaustrittsöffnungen angeordnet werden.

Die Anzahl der an dem Rotorblatt angeordneten, akustischen Sensoren und die Anzahl der Mikrofone können korrespondieren. Beispielsweise kann vorgesehen sein, jeder Fluidaustrittsöffnung zumindest einen akustischen Sensor zuzuordnen, der vorzugsweise in unmittelbarer Nähe zu der Fluidaustrittsöffnung positioniert wird. Dies ermöglicht beispielsweise, die aus den jeweiligen Fluidaustrittsöffnungen austretenden Fluidströmungen abhängig von den am Ort der jeweiligen Fluidaustrittsöffnungen - bzw. in unmittelbarer Nähe zu diesen - erfassten Schallmesswerten zu steuern.

Vorteilhafterweise sind die Dimensionen der Fluidaustrütsöffnungen, insbesondere deren wirksame Austrittsquerschnitte und/oder deren Anzahl und/oder deren räumliche Anordnung an dem Rotorblatt so gewählt, dass die rotorblattbedingten Geräusche so gut wie möglich reduziert werden.

An einem Rotorblatt sind in weiterer Ausbildung der Erfindung mindestens 15 Fluidaustrittsöffnungen angeordnet, bevorzugt mindestens 40, besonders bevorzugt mindestens 100.

Jedes Rotorblatt weist üblicherweise ein Strömungsprofil auf mit einer Überdruckseite und einer Unterdruckseite. Erfindungsgemäß sind die Fluidaustrittsöffnungen vorzugsweise auf der Unterdruckseite angeordnet. In Querschnittsansicht ist die Unterdruckseite häufig diejenige Seite des Rotorblattes, die eine stärkere Krümmung aufweist. Entlang der Krümmungslinie können dann die Fluidaustrittsöffnungen mit Abständen zueinander angeordnet sein. Es ist besonders vorteilhaft, die Fluidaustrittsöffnungen benachbart zum freien Ende des Rotorblattes anzuordnen.

Weitere Merkmale der vorliegenden Erfindung ergeben sich aus den beigefügten Unteransprüchen, der nachfolgenden Beschreibung eines bevorzugten Ausführungsbeispiels sowie aus den beigefügten Zeichnungen. Darin zeigen:
- Fig. 1: eine Windenergieanlage in Seitenansicht, die Rotorblätter mit Fluidaustrittsöffnungen aufweist, und
- Fig. 2: eine schematische Darstellung eines Rotorblattes aus Fig. 1 in Querschnittsansicht.

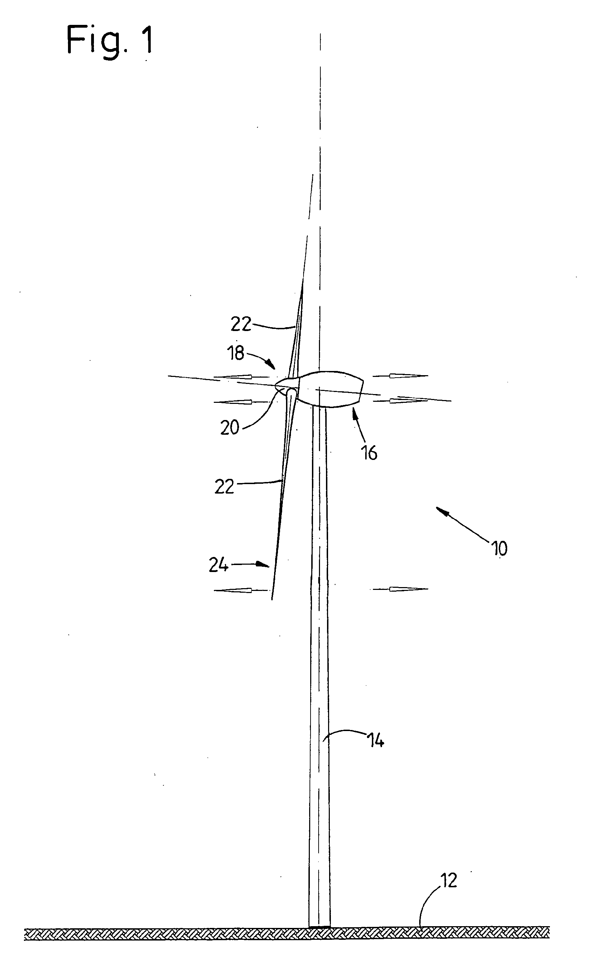

In der Fig. 1 ist eine Vorrichtung mit fluiddynamischen, nämlich aerodynamischen Auftriebskörpern dargestellt, nämlich eine Windenergieanlage 10. Die Windenergieanlage 10 weist am oberen Ende eines vertikalen, auf einem horizontalen Untergrund 12 angeordneten Turms 14 eine auf der Turmoberseite angeordnete Gondel 16 auf. Wie der Fachmann des Standes der Technik weiß, sind für die genaue Ausbildung eines Turms 14 einer Windenergieanlage 10 vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei fluiddynamische Auftriebskörper, nämlich drei Rotorblätter 22, wobei die Rotorblattwurzeln 23 der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel 16 angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte, Verstelleinrichtung können die Rotorblätter 22 einzeln in ihrer Stellung zum Wind verändert werden, das heißt, der Anstellwinkel der Rotorblätter 22 zum Wind ist einstellbar. Verschiedene Funktionen der Windenergieanlage 10 sind über eine nicht dargestellte, geeignete Steuerungseinrichtung steuerbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

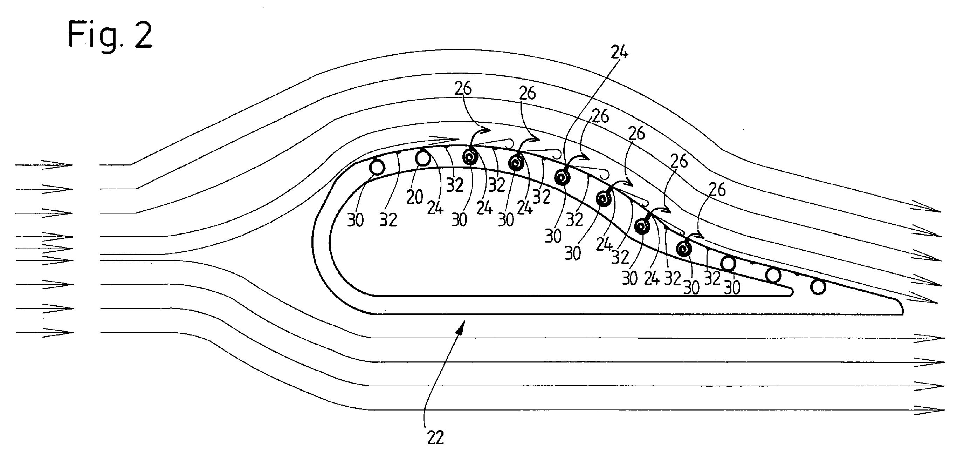

In Fig. 2 ist ein Rotorblatt 22 der Windenergieanlage 10 im Querschnitt dargestellt. Jedes Rotorblatt 22 weist Fiuidaustrittsöffnungen 24 auf. Aus den Fluidaustrittsöffnungen 24 wird während des Betriebs der Windenergieanlage 10, d.h. während der Rotation der Rotorblätter 22, unter Druck stehendes Fluid, nämlich Druckluft, gepresst, so dass aus jeder Fluidaustrittsöffnung 24 jeweils eine einzelne Luftströmung 26 bzw. ein Luftstrahl 26 austritt.

Die Fluidaustrittsöffnungen 24 sind an der Unterdruckseite des Rotorblattes 22 angeordnet, d. h. bezogen auf die Fig. 2 sind die Fluidaustrittsöffnungen 24 unmittelbar in die obere, gekrümmte Wandung 28 des Rotorblattes 22 eingelassen.

Die Öffnungen werden mit Druckluft versorgt über Druckluftkanäle 30, die innerhalb der Wandung der Rotorblätter 22 verlaufen. Naturgemäß können die Druckluftkanäle 30 auch alternativ im Inneren des Rotoblattes 22 angeordnet sein.

Die Druckluftkanäle 30 sind mit einer nicht dargestellten Druckluftquelle verbunden. Dabei ist die Druckluftquelle über nicht dargestellte Ventile mit den einzelnen Druckluftkanälen 30 sowie den Fluidaustrittsöifnungen 24 so verbunden, dass jede einzelne Fluidströmung 26 jeder Fluidaustrittsöffnungen 24 unabhängig von den anderen Fluidströmungen 26 gesteuert werden kann. Genauer gesagt, können Parameter der einzelnen Strömungen 26 der einzelnen Fluidaustrittsöffnungen 24 unabhängig voneinander eingestellt werden. Beispielsweise kann der Druck, unter dem die jeweilige Druckluft aus der jeweiligen Fluidaustrittsöffnung 24 gepresst wird, von Fluidaustrittsöffnung 24 zu Fluidaustrittsöffnung 24 unterschiedlich eingestellt werden.

Mit annähernd von links nach rechts verlaufenden Pfeilen ist in Fig. 2 Wind symbolisiert, der über das Rotorblatt 22 streicht. Durch die erzeugten Strömungen 26 wird im Betrieb der Windenergieanlage 10 verhindert, dass an den Rotorblättern 22 größere Wirbel und Strömungsabrisse entstehen. Entstehende Wirbel werden zerstreut.

Die einzelnen Parameter der einzelnen Strömungen 26 werden dabei abhängig von an dem Rotorblatt 22 tatsächlich entstehenden Windgeräuschen eingestellt, nämlich abhängig von gemessenen Schallwerten. Dazu sind unmittelbar benachbart zu den Fluidaustrittsöffnungen 24 akustische Sensoren, nämlich Mikrofone 32, angeordnet. Jeder Fluidaustrittsöffnung 24 ist dabei in unmittelbarer räumlicher Nähe ein Mikrofon 32 zugeordnet. Die Parameter jeder einzelnen Strömung 26 jeder Fluidaustrittsöffnung 24 können abhängig von den Schallwerten gesteuert werden, die mittels des dieser Fluidaustrittsöffnung 24 zugeordneten Mikrofons 32 gemessen wurde.

### Bezugszeichenliste:

- 10: Windenergieanlqage
- 12: Untergrund
- 14: Turm
- 16: Gondel
- 18: Rotor
- 20: Nabe
- 22: Rotorblatt
- 23: Rotorblattwurzel
- 24: Fluidaustrittsöffnung
- 26: Luftströmung
- 28: Wandung
- 30: Druckluftkanal
- 32: Mikrofon

## Patentansprüche

1. Verfahren zum Betreiben einer Vorrichtung, die zumindest einen fluiddynamischen Auftriebskörper aufweist, etwa eine Windenergieanlage mit Rotorblättern, ein Flugzeug mit Tragflächen, ein Hubschrauber mit Rotorblättern oder dergleichen, **dadurch gekennzeichnet, dass** insbesondere mittels geeigneter Sensoren, Kennwerte erfasst werden, die kennzeichnend sind für das Auftreten von auftriebskörperbedingten Verwirbelungen des diesen umgebenden Mediums, insbesondere auftriebskörperbedingten Geräuschen, und/oder für das Auftreten von Strömungsabrissen an dem Auftriebskörper und/oder für ein Vereisen des Auftriebskörpers (22), und dass abhängig von den erfassten Kennwerten aus einer Mehrzahl von einem oder jedem Auftriebskörper (22) zugeordneten Fluidaustrittsöffnungen (24) ein aus einer Druckquelle stammendes Fluid, etwa Luft, derart nach außen an das den Auftriebskörper (22) umgebende Medium geleitet wird, dass durch die resultierenden Fluidströmungen (26) die auftriebskörperbedingten Verwirbelungen und/oder die Strömungsabrisse und/oder das Vereisen reduziert oder verhindert werden.

2. Verfahren zum Betreiben einer Vorrichtung, die zumindest einen fluiddynamischen Auftriebskörper aufweist, etwa eine Windenergieanlage mit Rotorblättern, ein Flugzeug mit Tragflächen, ein Hubschrauber mit Rotorblättern oder dergleichen, **dadurch gekennzeichnet, dass** insbesondere mittels geeigneter Sensoren, Kennwerte erfasst werden, die kennzeichnend sind für das Auftreten von auftriebskörperbedingten Verwirbelungen des diesen umgebenden Mediums, insbesondere auftriebskörperbedingten Geräuschen, und/oder für das Auftreten von Strömungsabrissen an dem Auftriebskörper (22), und dass abhängig von den erfassten Kennwerten Betriebsparameter der Vorrichtung eingestellt werden, etwa der Windanstellwinkel eines Rotorblatts (22), und/oder dass ein oder mehrere Vorflügel des Auftriebskörpers (22) gesteuert werden, und/oder dass an dem Auftriebskörper (22) angeordnete Vortex-Generatoren gesteuert werden, insbesondere ein- und ausgefahren.

3. Verfahren zum Betreiben einer Windenergieanlage mit einem von Wind antreibbaren Rotor (18), mit zumindest einem Rotorblatt (22) sowie mit einem Generator zur Umwandlung der mechanischen Energie des Rotors (18) in elektrische Energie, insbesondere mit einem Turm (14), an dem der Rotor (18) angeordnet ist, **dadurch gekennzeichnet, dass** insbesondere mittels geeigneter Sensoren, Kennwerte erfasst werden, die kennzeichnend sind für das Auftreten rotorblattbedingter Windgeräusche und/oder für das Auftreten von Strömungsabrissen an dem Rotorblatt oder dergleichen und/oder für ein Vereisen des Rotorblattes (22), und dass abhängig von den erfassten Kennwerten aus einer Mehrzahl von einem oder jedem Rotorblatt (22) zugeordneten Fluidaustrittsöffnungen (24) ein aus einer Druckquelle stammendes Fluid, etwa Luft, derart nach außen an die das Rotorblatt (22) umgebende Luft geleitet wird, dass durch die resultierenden Fluidströmungen (26) rotorblattbedingte Windgeräusche und/oder Strömungsabrisse und/oder das Vereisen reduziert oder verhindert werden.

4. Verfahren zum Betreiben einer Windenergieanlage mit einem von Wind antreibbaren Rotor (18), mit zumindest einem Rotorblatt (22) sowie mit einem Generator zur Umwandlung der mechanischen Energie des Rotors (18) in elektrische Energie, insbesondere mit einem Turm (14), an dem der Rotor (18) angeordnet ist, **dadurch gekennzeichnet, dass** insbesondere mittels geeigneter Sensoren, Kennwerte erfasst werden, die kennzeichnend sind für das Auftreten rotorblattbedingter Windgeräusche und/oder für das Auftreten von Strömungsabrissen an dem Rotorblatt (22) oder dergleichen, und dass abhängig von den erfassten Kennwerten Betriebsparameter der Windenergieanlage (10) eingestellt werden, etwa der Windanstellwinkel des Rotorblatts (22), und/oder dass ein oder mehrere Rotorblattvorflügel gesteuert werden, und/oder dass an dem Rotorblatt (22) angeordnete Vortex-Generatoren gesteuert werden, insbesondere ein- und ausgefahren.

5. Verfahren gemäß einem oder mehreren der vorhergehenden Ansprüche, **dadurch gekennzeichnet, dass** die Kennwerte Schall- oder Luftdruckmesswerte umfassen, die während einer Bewegung des Auftriebskörpers, etwa einer Rotation eines Rotorblattes (22), in unmittelbarer Nähe zum Auftriebskörper (22) gemessen werden, insbesondere an der Oberseite des Auftriebskörpers (22), vorzugsweise mittels an dem Auftriebskörper (22) angeordneter akustischer Sensoren, etwa Mikrofonen (32).

6. Verfahren gemäß einem oder mehreren der vorhergehenden Ansprüche, **dadurch gekennzeichnet, dass** die Schall- oder Luftdruckmesswerte mittels Lichtstrahlen, vorzugsweise Laserstrahlen, erfasst werden, die zumindest abschnittsweise entlang des Auftriebskörpers (22) geführt werden.

7. Verfahren gemäß einem oder mehreren der vorhergehenden Ansprüche, **dadurch gekennzeichnet, dass** die Kennwerte die Windverhältnisse umfassen, die am Ort der Vorrichtung oder im Vorfeld der Vorrichtung, vorzugsweise Windenergieanlage (10), erfasst werden, insbesondere auf der windzugewandten Seite.

8. Verfahren gemäß einem oder mehreren der vorhergehenden Ansprüche, **dadurch gekennzeichnet, dass** die einzelnen Fluidströmungen (26), die aus den Fluidaustrittsöffnungen (24) austreten, unabhängig voneinander gesteuert werden.

9. Vorrichtung, die zumindest einen fluiddynamischen Auftriebskörper aufweist, etwa eine Windenergieanlage mit Rotorblättern, ein Flugzeug mit Tragflächen, ein Hubschrauber mit Rotorblättern oder dergleichen, **gekennzeichnet durch** eine Mehrzahl von dem Auftriebskörper (22) zugeordneten Fluidaustrittsöffnungen (24) sowie eine steuerbare Druckquelle, aus der den Fluidaustrittsöffnungen (24) Druckfluid, etwa Druckluft, zuleitbar ist, wobei in Abhängigkeit von erfassten Kennwerten, die kennzeichnend sind für das Auftreten von auftriebskörperbedingten Verwirbelungen des diesen umgebenden Mediums, insbesondere auftriebskörperbedingten Geräuschen, und/oder für das Auftreten von Strömungsabrissen an dem Auftriebskörper und/oder für ein Vereisen des Auftriebskörpers (22), das Druckfluid aus den Fluidaustrittsöffnungen (24) derart nach außen an das den Auftriebskörper (22) umgebende Medium leitbar ist, dass **durch** die resultierenden Fluidströmungen (26) die auftriebskörperbedingten Verwirbelungen und/oder die Strömungsabrisse und/oder das Vereisen reduzierbar oder verhinderbar sind.

10. Windenergieanlage mit einem von Wind antreibbaren Rotor (18), mit zumindest einem Rotorblatt (22) sowie mit einem Generator zur Umwandlung der mechanischen Energie des Rotors (18) in elektrische Energie, insbesondere mit einem Turm (14), an dem der Rotor (18) angeordnet ist, **gekennzeichnet durch** eine Mehrzahl von dem Rotorblatt (22) zugeordneten Fluidaustrittsöffnungen (24) sowie eine steuerbare Druckquelle, aus der den Fluidaustrittsöffnungen (24) Druckfluid, etwa Druckluft, zuleitbar ist, wobei in Abhängigkeit von erfassten Kennwerten, die kennzeichnend sind für das Auftreten rotorblattbedingter Windgeräusche und/oder für das Auftreten von Strömungsabrissen an dem Rotorblatt oder dergleichen und/oder für ein Vereisen des Rotorblattes (22), das Druckfluid aus den Fluidaustrittsöffnungen (24) derart nach außen an die das Rotorblatt (22) umgebende Luft leitbar ist, dass **durch** die resultierenden Fluidströmungen (26) rotorblattbedingte Windgeräusche und/oder Strömungsabrisse und/oder das Vereisen reduzierbar oder verhinderbar sind.

11. Vorrichtung, insbesondere Windenergieanlage, gemäß Anspruch 9 oder 10, **gekennzeichnet durch** eine Steuereinrichtung, mit der die Fluidströmungen (26) steuerbar sind.

12. Vorrichtung, insbesondere Windenergieanlage, gemäß einem oder mehreren der vorhergehenden Ansprüche 9 - 11, **dadurch gekennzeichnet, dass** dem Auftriebskörper (22), insbesondere einem Rotorblatt (22), Luftdrucksensoren und/oder akustische Sensoren, vorzugsweise Mikrofone, zugeordnet sind, insbesondere der Oberseite des Auftriebskörpers (22).

13. Vorrichtung, insbesondere Windenergieanlage, gemäß einem oder mehreren der vorhergehenden Ansprüche 9 - 2, **dadurch gekennzeichnet, dass** mit der Steuereinrichtung die aus den jeweiligen Fluidaustrittsöffnungen (24) austretenden, einzelnen Fluidströmungen (26) unabhängig voneinander steuerbar sind.

14. Vorrichtung, insbesondere Windenergieanlage, gemäß einem oder mehreren der vorhergehenden Ansprüche 9 - 13, **dadurch gekennzeichnet, dass** die Fluidaustrittsöffnungen (24) Bestandteil von insbesondere steuerbaren Düsen sind.

15. Vorrichtung, insbesondere Windenergieanlage, gemäß einem oder mehreren der vorhergehenden Ansprüche 9 - 14, **dadurch gekennzeichnet, dass** die Größe des wirksamen Querschnitts der Fluidaustrittsöffnungen (24) veränderbar ist.

16. Vorrichtung, insbesondere Windenergieanlage, gemäß einem oder mehreren der vorhergehenden Ansprüche 9 - 15, **dadurch gekennzeichnet, dass** die Fluidaustrittsöffnungen (24) an der Oberfläche des Auftriebskörpers (22) angeordnet sind und/oder in die Wandungen des Auftriebskörpers (22) eingelassen sind.

17. Vorrichtung, insbesondere Windenergieanlage, gemäß einem oder mehreren der vorhergehenden Ansprüche 9 - 16, **dadurch gekennzeichnet, dass** die Dimensionen der Fluidaustrittsöffnungen (24) und/oder deren Anzahl und/oder deren räumliche Anordnung an dem Rotorblatt (22) so gewählt sind, dass die rotorblattbedingten Geräusche reduzierbar sind.

18. Vorrichtung, insbesondere Windenergieanlage, gemäß einem oder mehreren der vorhergehenden Ansprüche 9-17, **dadurch gekennzeichnet, dass** dem Auftriebskörper (22) mindestens 15 Fluidaustrittsöffnungen (24) zugeordnet sind, bevorzugt mindestens 40, besonders bevorzugt mindestens 100.

19. Vorrichtung, insbesondere Windenergieanlage, gemäß einem oder mehreren der vorhergehenden Ansprüche 9 - 18, **dadurch gekennzeichnet, dass** der Auftriebskörper (22) ein Strömungsprofil aufweist mit einer Überdruckseite und einer Unterdruckseite, wobei die Fluidaustrittsöffnungen (24) an der Unterdruckseite angeordnet sind.
